# EUROPEAN PATENT APPLICATION

(11) **EP 4 564 701 A1**
(43) Date of publication of application: **04.06.2025**
(21) Application number: 24213896.4
(22) Date of filing: 19.11.2024
(51) Int. Cl.: H04B 7/06, H04B 7/08

(54) **METHOD FOR ENHANCED MEASUREMENT AND REPORTING**

(30) Priority: 01.12.2023 GB 202318376
(71) Applicant: Nokia Technologies Oy, 02610 Espoo (FI)
(72) Inventor: KARJALAINEN, Juha Pekka, Sotkamo (FI); HAKOLA, Sami-Jukka, Kempele (FI); KOSKELA, Timo, Oulu (FI); ENESCU, Mihai, Espoo (FI)
(74) Representative: Nokia EPO representatives

(57) **Abstract**

An apparatus comprising at least one processor; and at least one memory storing instructions that, when executed by the at least one processor, cause the apparatus at least to perform: receiving, from a network device, an indication indicating whether one or more receive antenna ports of the apparatus are used for at least one of channel measurements or channel state information reporting or channel or reference signal reception; information related to the one or more receive antenna ports for at least one of channel measurements or channel state information reporting or channel or reference signal reception, wherein the information comprises at least one receive antenna port set associated with at least a part of the one or more receive antenna ports; and information related to at least one receive antenna port of the receive antenna port set, wherein the receive antenna port set is associated with at least part of the one or more receive antenna ports, wherein at least one antenna port can be associated with one or more antenna arrangements; wherein the at least one memory further storing instructions that, when executed by the at least one processor, cause the apparatus at least to perform transmitting, to the network device, capability information related to usage of the one or more receive antenna ports for at least one of channel measurements or channel state information reporting or channel or reference signal reception.

## Description

### TECHNICAL FIELD

The present invention relates to channel state measurements based on one or more receive antenna ports, wherein the one or more receive antenna ports are dynamically shared.

### BACKGROUND

Today's and future wireless communication systems, such as Long Term Evolution (LTE) or 5^{th} Generation (5G), also referred to as New Radio (NR), 6^{th} Generation (6G), have been envisaged to use multiple input-multiple output (MIMO) multi-antenna transmission techniques. Constantly increasing requirements for high throughput motivates the wireless communication systems, such as 5G, to use the mmWave (millimeter wave) frequencies due to available high bandwidth.

However, the usage of mmWave frequencies poses new challenges on MIMO performance. Beamformed data transmission is realized by transmitting the signal from all the elements in the antenna array in the desired direction by applying an amplitude and phase precoding/beamforming weights, i.e., beam-weights. Beamformed transmission from large antenna array in massive MIMO of a network element, such as a base station, e.g., gNodeB (gNb), provides improved signal strength to the desired user equipment (UE) but may create significant interference to other UEs, if the beams create unwanted interference in the direction of the other UEs.

Multiple users can be scheduled simultaneously on a frequency-time resource in multi-user MIMO (MU-MIMO) while transmitting beamformed signal in users' dominant direction. MU-MIMO improves system throughput by co-scheduling multiple UEs in the same slot on the same physical resource blocks (PRBs). The benefits of MU-MIMO can be realized only if the beamformed transmission towards one UE does not create too much interference to the other co-scheduled UEs.

Current 3GPP (3^{rd} generation partnership project) NR specification does not provide support for a UE to perform CSI (channel state information) measurements and reporting by using flexibly its simultaneous reception capabilities in conjunction with advanced MIMO/MU-MIMO receivers with reduced complexity.

### SUMMARY

Various aspects include a method, an apparatus and a non-transitory computer readable medium comprising a computer program, or a signal stored therein, which are characterized by what is stated in the independent claims. Various details of the embodiments are disclosed in the dependent claims and in the corresponding images and description.

The scope of protection sought for various embodiments of the invention is set out by the independent claims. The embodiments and features, if any, described in this specification that do not fall under the scope of the independent claims are to be interpreted as examples useful for understanding various embodiments of the invention.

There is disclosed a new downlink (DL) channel state information (CSI) reporting and measurement methods and corresponding UE procedures to enable efficient utilization of advanced MIMO/MU-MIMO receivers with reduced computation complexity with one or more transmission configuration states associated with one or more transmission reception points (TRP)s where the TRPs can be deployed in a single downlink control information (single-DCI, S-DCI) and multi downlink control information (multi-DCI, m-DCI) manner.

In accordance with an embodiment, a terminal device performs channel measurements based on one or more RX antenna ports, wherein the one or more RX antenna ports are dynamically shared. The terminal device transmits, based on at least partly on the channel measurements and to the network device, CSI reports. The terminal device receives, from the network device, an indication indicating whether (dynamically shared) RX antenna ports are used for at least one of channel measurements or CSI reporting. The terminal device also receives, from the network device, information related to the one or more RX antenna ports for at least one of channel measurements or CSI reporting, wherein the information comprises at least one RX antenna port set associated with at least part of the one or more RX antenna ports. The terminal device further receives, from the network device, information related to a number of subsets of a RX antenna port set, wherein the RX antenna port set is associated with at least part of the one or more RX antenna ports. The terminal device transmits, to the network device, capability information related to usage of (dynamically shared) RX antenna ports for at least one of channel measurements or CSI reporting.

According to a first aspect, there is provided a user equipment comprising means for receiving, from a network device, an indication indicating whether one or more receive antenna ports of the apparatus are used for at least one of channel measurements or channel state information reporting or channel or reference signal reception; information related to the one or more receive antenna ports for at least one of channel measurements or channel state information reporting or channel or reference signal reception, wherein the information comprises at least one receive antenna port set associated with at least a part of the one or more receive antenna ports; and information related to at least one receive antenna port of the receive antenna port set, wherein the receive antenna port set is associated with at least part of the one or more receive antenna ports, wherein at least one antenna port is configured to be associated with one or more antenna arrangements; wherein the user equipment further comprises means for dynamically sharing one or more of the receive antenna ports for transmission and reception of signals; and means for transmitting, to the network device, capability information related to usage of the one or more receive antenna ports for at least one of channel measurements or channel state information reporting or channel or reference signal reception.

A user equipment according to a second aspect comprises: at least one processor and at least one memory storing instructions that, when executed by the at least one processor, cause the apparatus at least to perform receiving, from a network device, an indication indicating whether one or more receive antenna ports of the apparatus are used for at least one of channel measurements or channel state information reporting or channel or reference signal reception; information related to the one or more receive antenna ports for at least one of channel measurements or channel state information reporting or channel or reference signal reception, wherein the information comprises at least one receive antenna port set associated with at least a part of the one or more receive antenna ports; and information related to at least one receive antenna port of the receive antenna port set, wherein the receive antenna port set is associated with at least part of the one or more receive antenna ports, wherein at least one antenna port is configured to be associated with one or more antenna arrangements; wherein the at least one memory further storing instructions that, when executed by the at least one processor, cause the apparatus at least to perform dynamically sharing one or more of the receive antenna ports for transmission and reception of signals; and transmitting, to the network device, capability information related to usage of the one or more receive antenna ports for at least one of channel measurements or channel state information reporting or channel or reference signal reception.

A method according to a third aspect comprises receiving, from a network device, an indication indicating whether one or more receive antenna ports of the apparatus are used for at least one of channel measurements or channel state information reporting or channel or reference signal reception; information related to the one or more receive antenna ports for at least one of channel measurements or channel state information reporting or channel or reference signal reception, wherein the information comprises at least one receive antenna port set associated with at least a part of the one or more receive antenna ports; and information related to at least one receive antenna port of the receive antenna port set, wherein the receive antenna port set is associated with at least part of the one or more receive antenna ports, wherein at least one antenna port is associated with one or more antenna arrangements; wherein the method further comprises dynamically sharing one or more of the receive antenna ports for transmission and reception of signals; and transmitting, to the network device, capability information related to usage of the one or more receive antenna ports for at least one of channel measurements or channel state information reporting or channel or reference signal reception.

A user equipment according to a fourth aspect comprises a first circuitry for receiving, from a network device, an indication indicating whether one or more receive antenna ports of the apparatus are used for at least one of channel measurements or channel state information reporting or channel or reference signal reception; a second circuitry for receiving, from the network device, information related to the one or more receive antenna ports for at least one of channel measurements or channel state information reporting or channel or reference signal reception, wherein the information comprises at least one receive antenna port set associated with at least a part of the one or more receive antenna ports; a third circuitry for receiving, from the network device, information related to at least one receive antenna port of the receive antenna port set, wherein the receive antenna port set is associated with at least part of the one or more receive antenna ports, wherein at least one antenna port is configured to be associated with one or more antenna arrangements; a fourth circuitry for or dynamically sharing one or more of the receive antenna ports for transmission and reception of signals; and a fifth circuitry for transmitting, to the network device, capability information related to usage of the one or more receive antenna ports for at least one of channel measurements or channel state information reporting or channel or reference signal reception.

According to a fifth aspect, there is provided a network device comprising means for transmitting to a user equipment an indication indicating whether one or more receive antenna ports of the user equipment are used for at least one of channel measurements or receiver reporting or channel or reference signal reception; means for transmitting to the user equipment information related to at least one receive antenna port of a receive antenna port set, of the user equipment wherein the receive antenna port set is associated with at least part of the one or more receive antenna port; and means for receiving from the user equipment capability information related to usage of the one or more receive antenna ports for at least one of channel measurements or receiver reporting or channel or reference signal reception.

A network device according to a sixth aspect comprises: at least one processor and at least one memory storing instructions that, when executed by the at least one processor, cause the network device at least to perform transmitting to a user equipment an indication indicating whether one or more receive antenna ports of the user equipment are used for at least one of channel measurements or receiver reporting or channel or reference signal reception; transmitting to the user equipment information related to at least one receive antenna port of a receive antenna port set of the user equipment wherein the receive antenna port set is associated with at least part of the one or more receive antenna port; and receiving from the user equipment capability information related to usage of the one or more receive antenna ports for at least one of channel measurements or receiver reporting or channel or reference signal reception.

A method according to a seventh aspect comprises transmitting to a user equipment an indication indicating whether one or more receive antenna ports of the user equipment are used for at least one of channel measurements or receiver reporting or channel or reference signal reception; transmitting to the user equipment information related to at least one receive antenna port of a receive antenna port set of the user equipment wherein the receive antenna port set is associated with at least part of the one or more receive antenna port; and receiving from the user equipment capability information related to usage of the one or more receive antenna ports for at least one of channel measurements or receiver reporting or channel or reference signal reception.

An network device according to an eighth aspect comprises a first circuitry for transmitting to a user equipment an indication indicating whether one or more receive antenna ports of the user equipment are used for at least one of channel measurements or receiver reporting or channel or reference signal reception; a second circuitry for transmitting to the user equipment information related to at least one receive antenna port of a receive antenna port set, of the user equipment wherein the receive antenna port set is associated with at least part of the one or more receive antenna port; and a third circuitry for receiving from the user equipment capability information related to usage of the one or more receive antenna ports for at least one of channel measurements or receiver reporting or channel or reference signal reception.

Computer readable storage media according to further aspects comprise code for use by an apparatus, which when executed by a processor, causes the apparatus to perform the above methods.

### BRIEF DESCRIPTION OF THE DRAWINGS

For a more complete understanding of the example embodiments, reference is now made to the following descriptions taken in connection with the accompanying drawings in which:
Fig. 1 shows a block diagram of one possible and non-limiting example in which the examples may be practised;
Fig. 2a illustrates a part of a wireless network having several base stations and an exemplary user equipment;
Fig. 2b illustrates in a simplified manner beams of a base station serving an exemplary user equipment;
Fig. 2c illustrates a simplified example of single downlink control information based simultaneous physical downlink shared channel reception with two transmission reception points;
Fig. 3 shows a part of an exemplifying wireless communications access network in accordance with at least some embodiments;
Fig. 4 shows an example of CSI measurement and reporting options for dynamically shared RX antenna port sets;
Fig. 5 shows a flow chart of a method for a UE according to an embodiment; and
Fig. 6 shows a flow chart of a method for a network device according to another embodiment.

### DETAILED DESCRIPTON OF SOME EXAMPLE EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

It should be noted here that in this specification, the term `base station' refers to a logical element containing logical communication system layers (e.g. L1, L2, L3). The base stations of different RATs may be implemented in the same hardware or at separate hardware. It should also be mentioned that although the expressions "each base station" and "each mobile station" or "each user equipment" may be used, these terms need not mean every existing base station, mobile station or user equipment but base stations, mobile stations or user equipment in a certain area or set. For example, each base station may mean all base stations within a certain geographical area or all base stations of an operator of a wireless communication network or a sub-set of base stations of an operator of a wireless communication network.

It should also be noted that the terms terminal device, mobile station, user device and user equipment may be used interchangeably to describe a wireless communication device being able to communicate with a wireless communication network such as a cellular network or other mobile communication network.

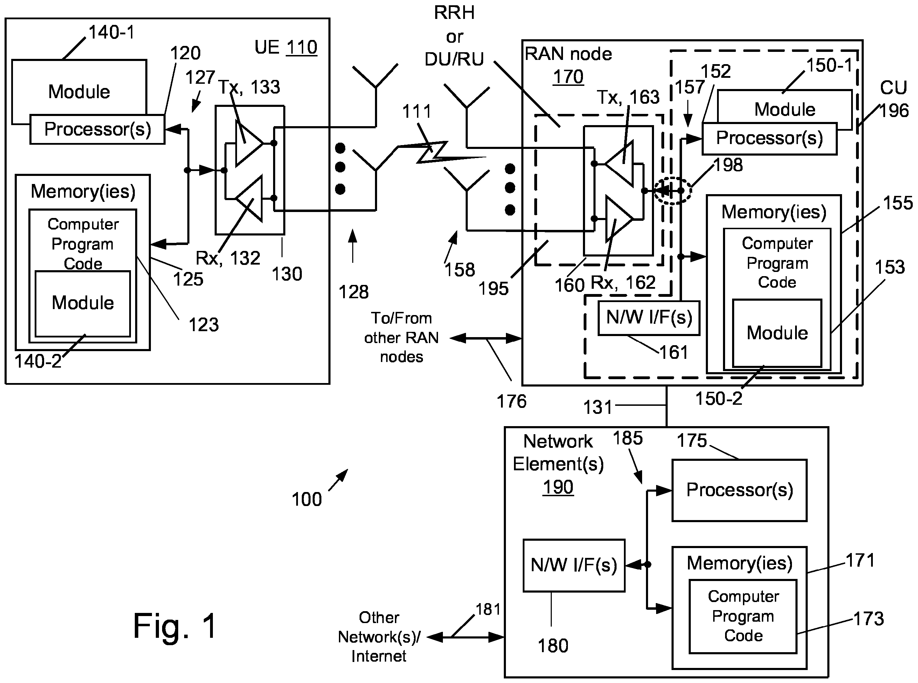

Fig. 1 shows a block diagram of one possible and non-limiting example in which the examples may be practiced. A user equipment (UE) 110, radio access network (RAN) node 170, and network element(s) 190 are illustrated. In the example of FIG. 1, the user equipment 110 is in wireless communication with a wireless network 100. A user equipment is a wireless device that can access the wireless network 100. The user equipment 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fibre optics or other optical communication equipment, and the like. The one or more transceivers 130 are connected to one or more antennas 128. The one or more memories 125 include computer program code 123. The user equipment 110 includes a module 140, which may be implemented in a number of ways. The module 140 may be implemented in hardware as module 140-1, such as being implemented as part of the one or more processors 120. The module 140-1 may also be implemented as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The user equipment 110 communicates with RAN node 170 via a wireless link 111. The modules 140-1 and 140-2 may be configured to implement the functionality of the user equipment as described herein.

The RAN node 170 in this example is a base station that provides access by wireless devices such as the user equipment 110 to the wireless network 100. Thus, the RAN node 170 (and the base station) may also be called as an access point of a wireless communication network. The RAN node 170 may be, for example, a base station for 5G, also called New Radio (NR). In 5G, the RAN node 170 may be a NG-RAN node, which is defined as either a gNB or an ng-eNB. A gNB is a node providing NR user plane and control plane protocol terminations towards the UE and connected via the NG interface to a 5GC (such as, for example, the network element(s) 190). The ng-eNB is a node providing E-UTRA user plane and control plane protocol terminations towards the UE and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU 195 may include or be coupled to and control a radio unit (RU). The gNB-CU 196 is a logical node hosting radio resource control (RRC), SDAP and PDCP protocols of the gNB or RRC and PDCP protocols of the en-gNB that controls the operation of one or more gNB-DUs. The gNB-CU 196 terminates the F1 interface connected with the gNB-DU 195. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU 195 is a logical node hosting RLC, MAC and PHY layers of the gNB or en-gNB, and its operation is partly controlled by gNB-CU 196. One gNB-CU 196 supports one or multiple cells. One cell is supported by one gNB-DU 195. The gNB-DU 195 terminates the F1 interface 198 connected with the gNB-CU 196. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memory(ies) 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may also be implemented as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195. The modules 150-1 and 150-2 may be configured to implement the functionality of the base station described herein. Such functionality of the base station may include a location management function (LMF) implemented based on functionality of the LMF described herein. Such LMF may also be implemented within the RAN node 170 as a location management component (LMC).

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU 195, and the one or more buses 157 could be implemented in part as, for example, fiber optic cable or other suitable network connection to connect the other elements (e.g., a central unit (CU), gNB-CU) of the RAN node 170 to the RRH/DU 195. Reference 198 also indicates those suitable network link(s).

It is noted that description herein indicates that "cells" perform functions, but it should be clear that equipment which forms the cell may perform the functions. The cell makes up part of a base station. That is, there can be multiple cells per base station. For example, there could be three cells for a single carrier frequency and associated bandwidth, each cell covering one-third of a 360-degree area so that the single base station's coverage area covers an approximate oval or circle. Furthermore, each cell can correspond to a single carrier and a base station may use multiple carriers. So, if there are three 120-degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include location management functions (LMF(s)) and/or access and mobility management function(s) (AMF(S)) and/or user plane functions (UPF(s)) and/or session management function(s) (SMF(s)). Such core network functionality for LTE may include MME (Mobility Management Entity)/SGW (Serving Gateway) functionality. These are merely example functions that may be supported by the network element(s) 190, and note that both 5G and LTE functions might be supported. The RAN node 170 is coupled via a link 131 to the network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations such as functionality of an LMF as described herein. In some examples, a single LMF could serve a large region covered by hundreds of base stations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor-based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general-purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, network element(s) 190, and other functions as described herein.

In general, the various embodiments of the user equipment 110 can include, but are not limited to, cellular telephones such as smartphones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Module 150-1 and/or module 150-2 may implement the functionalities and signaling of the gNB or radio node as herein described. Computer program code 173 may implement the functionalities and signaling of the AMF or network element as herein described.

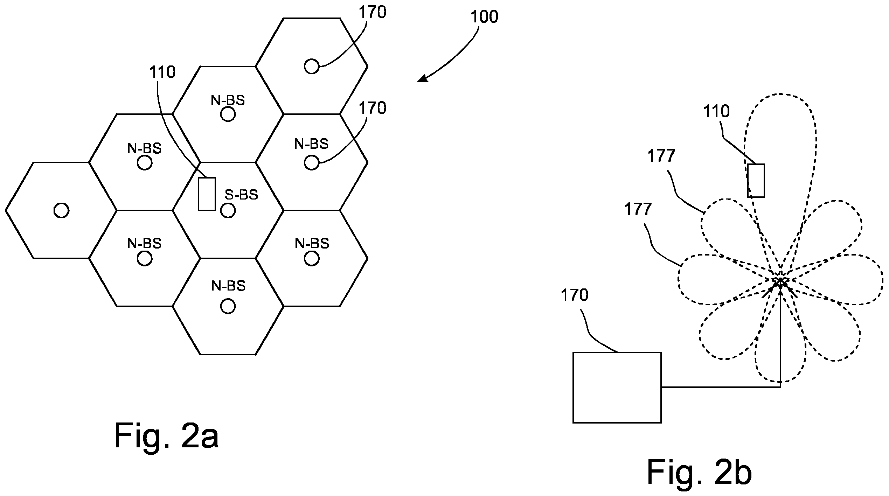

Fig. 2a illustrates a part of a wireless network 100 having several base stations 170 and an exemplary user equipment 110. In Fig. 2a it is assumed that the base station marked as S-BS is the serving base station, when the user equipment is in connected state, and the base station where the user equipment is camped on when not in connected state. Some of the neighbouring base stations are labelled as N-BS in Fig. 2a. In practical situations the serving base station and the camped on base station may change, e.g., when the user equipment is moving, or if the signal strength from different base stations changes (e.g. signals from a neighbouring base station N-BS becomes stronger than signals from the currently serving base station).

The serving base station may have assigned one or more beams 177 (Fig. 2b) for the user equipment on the basis of some criteria. For example, that beam which is directed towards the location of the user equipment may be selected for the user equipment and if the user equipment moves to another location, another beam directed towards that new location may be selected instead. In Fig. 2b most of the beams are illustrated being similar to each other and one beam is illustrated to have stronger signal than the others but in practical implementations different beams may have different parameters such as signal strength, width length etc. It should also be noted that the beams depicted in Fig. 2b are only illustrative but in reality, the beams may have different forms and sizes.

A base station may have a spatial beam codebook which includes information of beams available by a base station.

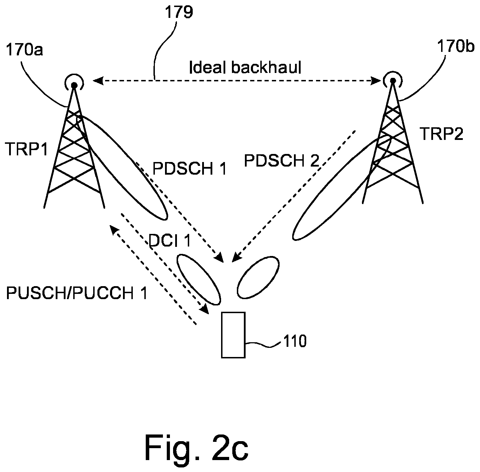

Fig. 2c illustrates a simplified example of a multi-transmission reception point context. A user equipment 110 may communicate with two or more transmission reception points in a multi-TRP context. In Fig. 2c two transmission reception points are shown: a first transmission reception point TRP1 170a and a second transmission reception point TRP2 170b. These transmission reception points 170a, 170b may be cells or access points of the wireless communication network. These transmission reception points 170a, 170b may also be able to communicate with each other, e.g., via a backhaul connection 179.

In multi-TRP operation, a serving cell can schedule the UE from two TRPs, providing better coverage, reliability and/or data rates for PDSCH (Physical Downlink Shared Channel), PDCCH (Physical Downlink Control Channel), PUSCH (Physical Uplink Shared Channel), and PUCCH (Physical Uplink Control Channel). There are two different operation modes to schedule multi-TRP PDSCH transmissions: single-DCI and multi-DCI. In the single-DCI mode, the UE is scheduled by the same DCI for both TRPs and in the multi-DCI mode, the UE is scheduled by independent DCIs from each TRP.

For the multi-TRP two operation modes for the PDCCH may be utilized. One of the operation modes is a PDCCH repetition mode and the other is a system frame number (SFN) based PDCCH transmission mode. In both modes, the UE can receive two PDCCH transmissions, one from each TRP, carrying the same DCI. In PDCCH repetition mode, the UE can receive the two PDCCH transmissions carrying the same DCI from two linked search spaces each associated with a different CORESET. In SFN based PDCCH transmission mode, the UE can receive the two PDCCH transmissions carrying the same DCI from a single search space/CORESET using different TCI (Transmission Configuration Indicator) states.

For multi-TRP PUSCH repetition, according to indications in a single DCI or in a semi-static configured grant provided over RRC, the UE performs PUSCH transmission of the same contents toward two TRPs with corresponding beam directions associated with different spatial relations. For multi-TRP PUCCH repetition, the UE performs PUCCH transmission of the same contents toward two TRPs with corresponding beam directions associated with different spatial relations.

For inter-cell multi-TRP operation, for multi-DCI PDSCH transmission, one or more TCI states can be associated with SSB (Synchronization Signal Block) with a PCI (Physical Cell Identifier) different from the serving cell PCI. The activated TCI states can be associated with at most one PCI different from the serving cell PCI at a time.

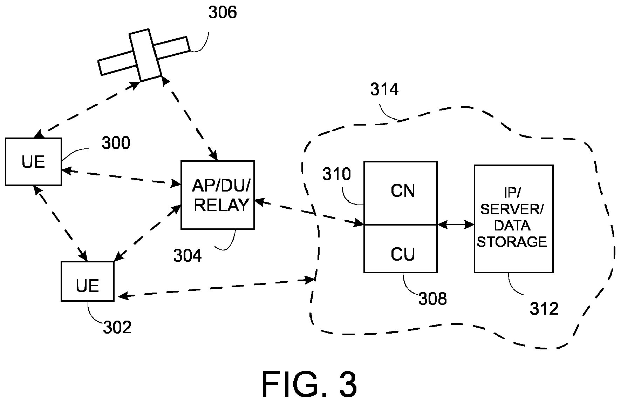

Fig. 3 depicts an example of a simplified system architecture only showing some elements and functional entities, all being logical units, whose implementation may differ from what is shown. The connections shown in Fig. 3 are logical connections; the actual physical connections may be different. It is apparent to a person skilled in the art that the system typically comprises also other functions and structures than those shown in Fig. 3. The embodiments are not, however, restricted to the system given as an example but a person skilled in the art may apply the solution to other communication systems provided with necessary properties.

The example of Fig. 3 shows a part of an exemplifying radio access network.

Fig. 3 shows user devices 300 and 302 configured to be in a wireless connection on one or more communication channels in a cell with an access node (such as (e/g)NodeB) 304 providing the cell, wherein (e/g)NodeB stands for an eNodeB or a gNodeB or a node that is capable of being both. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point etc. entity suitable for such a usage.

A communication system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit, which may also be called as an antenna arrangement, that establishes bidirectional radio links to user devices. The antenna unit may comprise a plurality of antennas or antenna elements. The (e/g)NodeB is further connected to core network 310 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc. The CN may comprise network entities or nodes that may be referred to management entities. Examples of the network entities comprise at least an Access and Mobility Management Function (AMF).

The user device (also called a user equipment (UE), a user terminal, a terminal device, a wireless device, a mobile station (MS) etc.) illustrates one type of an apparatus to which resources on the air interface are allocated and assigned, and thus any feature described herein with a user device may be implemented with a corresponding network apparatus, such as a relay node, an eNB, and a gNB. An example of such a relay node is a layer 3 relay (self-backhauling relay) towards the base station.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. Accordingly, the user device may be an IoT-device. The user device may also utilize cloud. In some applications, a user device may comprise a small portable device with radio parts (such as a watch, earphones or eyeglasses) and the computation is carried out in the cloud. The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. The access nodes of the radio network form transmission/reception (TX/Rx) points (TRPs), and the UEs are expected to access networks of at least partly overlapping multi-TRPs, such as macro-cells, small cells, pico-cells, femto-cells, remote radio heads, relay nodes, etc. The access nodes may be provided with Massive MIMO antennas, i.e. very large antenna array consisting of, e.g., hundreds of antenna elements, implemented in a single antenna panel or in a plurality of antenna panels, capable of using a plurality of simultaneous radio beams for communication with the UE. The UEs may be provided with MIMO antennas having an antenna array consisting of, e.g., dozens of antenna elements, implemented in a single antenna panel or in a plurality of antenna panels. Thus, the UE may access one TRP using one beam, one TRP using a plurality of beams, a plurality of TRPs using one (common) beam or a plurality of TRPs using a plurality of beams.

The 4G/LTE networks support some multi-TRP schemes, but in 5G NR the multi-TRP features are enhanced, e.g., via transmission of multiple control signals via multi-TRPs, which enables to improve link diversity gain. Moreover, high carrier frequencies (e.g., mmWaves) together with the Massive MIMO antennas require new beam management procedures for multi-TRP technology.

5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also capable of being integrated with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

Frequency bands for 5G NR are separated into two frequency ranges: Frequency Range 1 (FR1) including sub-6 GHz frequency bands, i.e. bands traditionally used by previous standards, but also new bands extended to cover potential new spectrum offerings from 410 MHz to 7125 MHz, and Frequency Range 2 (FR2) including frequency bands from 24.25 GHz to 52.6 GHz. Thus, FR2 includes the bands in the mmWave range, which due to their shorter range and higher available bandwidth require somewhat different approach in radio resource management compared to bands in the FR1.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 312, or utilize services provided by them. The communication network may also be able to support the usage of cloud services, for example at least part of core network operations may be carried out as a cloud service (this is depicted in Fig. 3 by "cloud" 314). The communication system may also comprise a central control entity, or the like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU) and non-real time functions being carried out in a centralized manner (in a centralized unit, CU 308).

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well. The gNB is a next generation Node B (or, new Node B) supporting the 5G network (i.e., the NR).

5G may also utilize non-terrestrial nodes 306, e.g., access nodes, to enhance or complement the coverage of 5G service, for example by providing backhauling, wireless access to wireless devices, service continuity for machine-to-machine (M2M) communication, service continuity for Internet of Things (IoT) devices, service continuity for passengers on board of vehicles, ensuring service availability for critical communications and/or ensuring service availability for future railway/maritime/aeronautical communications. The non-terrestrial nodes may have fixed positions with respect to the Earth surface or the non-terrestrial nodes may be mobile non-terrestrial nodes that may move with respect to the Earth surface. The non-terrestrial nodes may comprise satellites and/or HAPSs. Satellite communication may utilize geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node 304 or by a gNB located on-ground or in a satellite.

A person skilled in the art appreciates that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Fig. 1). A HNB Gateway (HNB-GW), which is typically installed within an operator's network may aggregate traffic from a large number of HNBs back to a core network.

The Radio Resource Control (RRC) protocol is used in various wireless communication systems for defining the air interface between the UE and a base station, such as eNB/gNB. This protocol is specified by 3GPP in in TS 36.331 for LTE and in TS 38.331 for 5G. In terms of the RRC, the UE may operate in LTE and in 5G in an idle mode or in a connected mode, wherein the radio resources available for the UE are dependent on the mode where the UE at present resides. In 5G, the UE may also operate in inactive mode. In the RRC idle mode, the UE has no connection for communication, but the UE is able to listen to page messages. In the RRC connected mode, the UE may operate in different states, such as CELL_DCH (Dedicated Channel), CELL_FACH (Forward Access Channel), CELL_PCH (Cell Paging Channel) and URA_PCH (URA Paging Channel). The UE may communicate with the eNB/gNB via various logical channels like Broadcast Control Channel (BCCH), Paging Control Channel (PCCH), Common Control Channel (CCCH), Dedicated Control Channel (DCCH), Dedicated Traffic Channel (DTCH).

The transitions between the states is controlled by a state machine of the RRC. When the UE is powered up, it is in a disconnected mode/idle mode. The UE may transit to RRC connected mode with an initial attach or with a connection establishment. If there is no activity from the UE for a short time, eNB/gNB may suspend its session by moving to RRC Inactive and can resume its session by moving to RRC connected mode. The UE can move to the RRC idle mode from the RRC connected mode or from the RRC inactive mode.

The actual user and control data from network to the UEs is transmitted via downlink physical channels, which in 5G include Physical downlink control channel (PDCCH) which carries the necessary downlink control information (DCI), Physical Downlink Shared Channel (PDSCH), which carries the user data and system information for user, and Physical broadcast channel (PBCH), which carries the necessary system information to enable a UE to access the 5G network.

The user and control data from UE to the network is transmitted via uplink physical channels, which in 5G include Physical Uplink Control Channel (PUCCH), which is used for uplink control information including HARQ feedback acknowledgments, scheduling request, and downlink channel-state information for link adaptation, Physical Uplink Shared Channel (PUSCH), which is used for uplink data transmission, and Physical Random Access Channel (PRACH), which is used by the UE to request connection setup referred to as random access.

For the 5G technology, one of the most important design goals has been improved metrics of reliability and latency, in addition to network resilience and flexibility.

Especially when considering the operating of the UE in the Frequency Range 2 (FR2; 24.25 GHz to 52.6 GHz) including the mmWave range, the UE implementation is expected to have multiple antenna panels (Multi-Panel UE, MPUE) to perform beam steering over a large solid angle aiming to maximize the reliability.

Processing of communication in the UE and the network element may utilize a so-called protocol stack, wherein messages are received and decoded by a physical layer and transferred to higher layer(s). The expression higher layer means in this context a level of the protocol stack, which is above the physical layer, which is the first layer of the NR radio interface protocol architecture and provides data transport services to higher layers. Transport services are accessed through transport channels between the physical layer and the medium access control (MAC) part of the second layer in the protocol stack. This layer handles modulation and demodulation as well as MIMO processing and mapping of the coded transport channel to the correct physical channels. The physical layer also interfaces with the radio resource control (RRC) part of the third layer. There are also other layers in the protocol stack, but it is not necessary to describe them in more detail in this context.

Communications between a user equipment and a wireless communication network may comprise uplink transmissions and/or downlink transmissions of data. The uplink transmissions may be performed from a UE to the wireless communication network, e.g., to a transmission reception point, and the downlink transmissions may be performed from the transmission reception point to the UE. The uplink transmissions may be performed on an uplink shared channel, e.g., a Physical Uplink Shared Channel (PUSCH). The PUSCH may be transmitted by the wireless device on the basis of a dynamic/configured grant received on a downlink control channel, e.g., a Physical Downlink control Channel (PDCCH). The downlink transmissions may be performed on a downlink shared channel, e.g., a Physical Downlink Shared Channel (PDSCH). The downlink and uplink transmissions may be organized into frames, e.g., a radio frame. In an example, each frame may be of 10 ms duration and divided into subframes of 1ms duration. Each subframe may further be divided into multiple Orthogonal Frequency Division-Multiplexing (OFDM) symbols. The OFDM symbols may be arranged to slots within each subframe. In an example, the radio frame may include 10 subframes. One subframe may include two consecutive slots of 14 symbols with 30kHz sub-carrier spacing. Accordingly, the radio frame may in total include 20 slots.

To obtain CSI information at network side for downlink or uplink transmission, UE may be configured with CSI-reporting which can have different functionalities, such as DL CSI reporting, i.e. channel quality indicator (CQI), precoding matrix indicator (PMI) and rank indicator (RI), as well as beam reporting for downlink or both downlink and uplink or uplink TX beams. In beam reporting UE reports measurement results and corresponding resources on a set of (e.g. best/highest quality) downlink reference signal (DL RS) resources to the network. That is based on which gNB/network makes decisions about the used beam pair per link for both downlink and uplink or downlink or uplink separately. The UE can be configured to report either L1-RSRP (Layer 1 - reference signal received power) or L1-SINR (Layer 1 - signal-to-interference-plus-noise ratio) value(s) for the reported DL RS(s). The reporting can be periodic, semi-persistent or aperiodic reporting triggered by the gNB via DCI command on PDCCH.

Alternatively, to obtain uplink or downlink CSI information for uplink or downlink transmission(s), UE can be configured with sounding reference signals (SRS) with different usage, e.g. codebook/non-codebook/beam management, antenna-switching. This may be performed, for example, in four phases. In a first phase the UE is configured for SRS by gNB. In this phase the gNB determines about SRS configuration (e.g, SRS physical resources, usage, report period timing etc.) and notifies the configuration to UE via RRC messages (e.g, RRCSetup, RRCReconfiguration). The SRS configuration is provided to the UE by the gNB, and it may vary depending on the cell's conditions and traffic requirements.

In a second phase the UE transmits the SRS resource(s) to the gNB. The SRS is a predefined signal associated with resource with known characteristics, at a specific time and frequency domains. The UE may send the SRS periodically/semi-persistently or aperiodically, as instructed by the gNB, on the uplink (UL) channel.

In a third phase the gNB receives the SRS and measures and analyzes the received signal. The gNB estimates the channel state information (CSI) by using received SRS and the known properties of SRS resource (e.g. configured comb-type, cyclic-shift, sequence ID of pre-defined sequence. The gNB evaluates various parameters, such as propagation delay (phase delay), and received signal strength, phase, amplitude, just to name few, to understand the current radio environment and channel conditions between the gNB and the UE.

In a fourth phase the gNB may utilize the SRS. Once the gNB has estimated the channel state based on the SRS, it may use this information to optimize its resource allocation and scheduling decisions. This can involve adjusting transmission parameters (such as modulation and coding schemes) or selecting the most appropriate MIMO settings (including PMI, CQI and RI selection) to enhance the overall system capacity and improve the user experience.

In 5G systems a user equipment may be configured to perform uplink transmissions related to several control plane activities. The control plane activities may comprise uplink control information and CSI reporting. CSI reporting is configured by CSI-ReportConfig. Depending on the configured reporting type in CSI-ReportConfig, CSI reporting may be periodic (over PUCCH), semi-persistent (over PUCCH or Physical Uplink Shared Channel (PUSCH)), or aperiodic (PUSCH). The report payload depends on the configured CSI reporting quantities and their format/configuration. Supported CSI reporting quantities include Channel Quality Indicator (CQI), Rank Indicator (RI), Precoding Matrix Indicator (PMI), Channel State Information Reference Signal (CSI-RS) Resource Indicator (CRI), SS/PBCH Resource Block Indicator (SSBRI), Layer Indicator (LI), Reference Signal Received Power (RSRP) and/or L1-Signal to interference and noise ratio (SINR).

The channel state information reporting comprises the UE transmitting CSI reports to the wireless network. The UE may measure downlink channel state information reference signals and/or SSB and report results of the CSI-RS measurements in a CSI report on the basis of the channel state information reporting configuration. CSI reports may be transmitted by the wireless device periodically, semi-persistently or aperiodically on the basis of the state information reporting configuration and MAC-CE activation/deactivation, for the semi-persistent case, and DCI-based triggering for the aperiodic case. Accordingly, the CSI reports may have a certain reporting periodicity and offset, in the case of periodic and semi-persistent CSI reporting. An example of a CSI reporting configuration is defined by CSI-ReportConfig in 3GPP TS 38.331. The CSI reporting quantities that a CSI report is expected to contain are configured in reportQuantity in CSI-ReportConfig. The report may contain information on Channel Quality Indicator, rank indicator, precoding matrix indicator, and/or Reference Signal Received Power (RSRP). CSI-reportConfig also indicates format and/or codebook configuration of CSI quantities, when applicable. CSI ReportConfig may also specify which of CSI ResourceConfig to be used for the measurement. It has a mapping table between the measurement type and the corresponding CSI ResourceConfig ID.

CSI ResourceConfig specifies on what type of reference signal (nzp-CSI-RS-SSB, csi-IM-Resource) is to be transmitted. It also configures the types of the transmission (periodic, aperiodic, semipersistent). XXX-YYY-Resource and ResourceSet just defines the structure of the CSI resources in which the expression XXX-YYY represents, for example, CSI-SSB or CSI-IM or NZP-CSI-RS or ZP-CSI-RS. They don't trigger the transmission of the resources. It is CSI ResourceConfig that triggers the transmission of the resources.

In the following, some example embodiments will be described in more detail. It is assumed that a UE has information of its properties related to certain capabilities and/or the UE is capable of obtaining such information. It is also assumed that the UE comprises a MIMO antenna for communication, wherein the MIMO antenna has a number of antenna elements arranged in an array form and each element may be connected to a transmitter and/or a receiver, possibly through a phase shifter and/or an amplifier. The UE may also have one or more (logical) antenna ports for transmission (transmission ports, TX-AP) and for reception (reception ports, RX-AP). The UE may be able to map the antenna ports to certain antenna elements and it may also be possible that the mapping may change. The mapping may be, for example, one-to-one, i.e., one antenna port is mapped to one antenna element, or one-to-many, i.e., one antenna port is mapped to more than one antenna element, or many-to-one, i.e., more than one antenna port is mapped to one antenna element.

In accordance with an embodiment, the UE prepares a capability report to inform the wireless communication network of some of capabilities of the UE. In the report the UE includes indication whether the UE supports dynamically shared set of RX antenna ports for measurements, for example, for downlink CSI measurements. The capability information may also indicate whether the UE supports reception of DL reference signal, for example, a non-zero power channel state information reference signal (NZP-CSI-RS) and/or data/control channels (e.g., PDSCH).

The capability report is transmitted by the UE to a transmission-reception point TRP of the wireless communication network.

In one option, the capability report includes at least one of the following information elements: the maximum number of dynamically shared RX antenna ports, which may be expressed as Max-Dynamic-Shared-Rx-Aps; the maximum number of dynamically shared RX antenna port sets, which may be expressed as Max-nmb-Dynamic-Shared-RX-AP-sets; the maximum number of sub-sets per RX antenna port set valid for all sets, which may be expressed as Max-nmb-Dynamic-Shared-RX-SubSets; and/or supported dynamically shared RX antenna port configurations, where each set has its own RX antenna port combinations associated with different sub-sets. For example, the sub-sets may be a first reception antenna port set RX-AP-set#1, a second reception antenna port set RX-AP-set#2, etc.

In one alternative approach, instead of reporting of specific shared RX antenna port configurations per set, supported dynamically shared RX antenna port configurations are determined based on a nested structure of RX antenna port combinations which is based on reported maximum number of dynamically shared RX antenna ports and reported maximum number of sub-sets of different set combinations. It should be noted that different sets are excluded where sub-sets have the same RX antenna ports. For example, in a case that the first reception antenna port set RX-AP set#1 has 2R4R and the second reception antenna port set RX-AP-set#2 has 4R2R, the second reception antenna port set RX-AP-set#2 4R2R is omitted. The expression MRNR means that M antenna ports are associated with reception of the first TCI state and N antenna ports are associated with reception of the second TCI state.

The report is sent from the UE to the wireless communication network and processed by a network element, for example a gNB. The network element examines the report and prepares control information to be transmitted to the UE for controlling how the UE should adapt its properties.

The UE receives a control information message from the network element and examines the content of the information message. The control information message may include, for example, a CSI-MeasConfig information element.

In accordance with an embodiment, based on capability reported by the UE to the wireless communication network, the network indicates in the control information message that the UE is configured to perform joint CSI measurements and CSI report with dynamically shared RX antenna ports by using configured measurement resources, e.g., a downlink non-zero power channel state information reference signal DL NZP-CSI-RS.

Now, some higher layer parameters will be explained. A parameter `Use-dynamically-shared-simultaneous-RX-AntennaPorts' indicates, as the expression reveals, whether to use dynamically shared simultaneous RX antenna ports and this parameter may receive a value 'enabled' or 'disabled'. This parameter may be included in the information element CSI-MeasConfig from the network. Another parameter is reportQuantity information element for which several values may be given. One possible value is `CRI-RI-PMI-CQI-RxSet', which indicates a quantity of RX sets to be reported. Another parameter for the reportQuantity information element is `CRI-RI-PMI-CQI-nmbOfSubSets', which indicates a quantity of RX subsets to be reported.

When the parameter 'Use-dynamically-shared-simultaneous-RX-AntennaPorts' in the information element CSI-MeasConfig set to 'enabled', as well as 'CRI-RI-PMI-CQI-RxSet' and 'CRI-RI-PMI-CQI-nmbOfSubSets' in the information element CSI-ReportConfig are configured, by using multiple hypothesis associated with dynamically shared RX antenna ports, the UE shall select one RX antenna port set among candidates according to configured selection criteria. For example, the quantity of RX sets to be reported is greater than one, wherein the parameter 'CRI-RI-PMI-CQI-RxSet' is set to N (>1) (e.g. 4), and the quantity of RX subsets to be reported is greater than one, wherein the parameter as well as 'CRI-RI-PMI-CQI-nmbOfSubSets' is set to M (>1), e.g., 2, in the information element CSI-ReportConfig.

If no criterion is configured related to the selection of dynamically shared RX antenna ports, i.e., the parameter `Use-dynamically-shared-simultaneous-RX-AntennaPorts' does not exist in the information element CSI-MeasConfig or is set to 'disabled', the UE shall select an RX antenna port set according to its own implementation specific way. Otherwise, the UE shall perform selection according to configured criteria.

In one embodiment, the UE can be configured to apply a specific dynamically shared RX antenna port set for CSI-measurement and reporting. The network, for example a TRP or gNB, may indicate the UE for a specific dynamically shared RX antenna set ID associated with dynamically-shared-simultaneous-RX antenna ports via a higher layer, such as the RRC or MAC (e.g. MAC CE), or via the physical layer signaling (e.g. DCI).

Upon reception of RRC, MAC or the physical layer indication (e.g. via DCI) related to the dynamically shared RX set ID, the UE shall apply indicated dynamically shared RX antenna port set ID for the CSI measurement and reporting and/or reception of PDSCH and related downlink reference signal (e.g. demodulation reference signal (DMRS), phase tracking reference signal (PTRS), time and frequency tracking reference signal (TRS)).

In one embodiment, the UE may be configured with a specific selection criterion in the CSI-reportConfig information element to determine the selection of the set of shared RX antenna ports for measurement, reporting (e.g. CSI) and/or reception of a channel and reference signal (e.g. PDSCH, DMRS, PTRS, TRS).

The selection criterion can be one of the following:
- 'maxEnergy saving' targeting to maximize energy saving by selecting dynamically shared RX antenna ports for CSI measurements and reporting in such a way that energy saving associated with PDSCH reception is maximized.
- 'maxThroughput' targeting to maximize PDSCH throughput by selecting dynamically shared RX antenna ports for CSI measurements and reporting such a way that PDSCH throughput is maximized.
- 'lowLatency' targeting to maximize PDSCH throughput by selecting dynamically shared RX antenna ports for CSI measurements and reporting in such a way that latency associated with PDSCH processing is maximized.
- 'highReliability' targeting to maximize PDSCH reliability by selecting dynamically shared RX antenna ports for CSI measurements and reporting in such a way that PDSCH reception reliability is maximized.

It should be noted that the selection criterion may allow the UE to use the most feasible implementation specific way to perform measurements and reporting as well as PDSCH.

If the selection criterion is not configured, the UE is allowed to select the set of antenna ports applied for measurement and/or reception according to its own implementation specific manner.

In one implementation example of UE capability report, each sub-set of dynamically shared RX antenna port set is associated with indicated TCI states. Additionally, capability information may also include maximum number supported TCI states for simultaneous reception.

For example, the first sub-set of a RX antenna port set is associated with the first TCI and the second sub-set of the RX antenna port set is associated with the second TCI, or the first sub-set of a RX antenna port set is associated with the first TCI, the second sub-set of the RX antenna port set is associated with the second TCI, the third set of RX antenna ports is associated with the third TCI, the fourth set of RX antenna ports is associated with the fourth TCI, etc.

It should be noted that the number of supported groups and number of TCI states is up to UE capability.

In another implementation example, the UE reports that the maximum number of dynamically shared RX antenna ports to be 8, the maximum number of dynamically shared RX antenna port sets to be 4, and the maximum number of sub-sets per RX antenna port set valid for all sets to be 2. Additionally, the UE reports that it supports the following four different dynamically shared RX antenna port set specific configurations:

RX-AP-set#1, 6R2R, where `6R' defines that 6 antenna ports are associated with reception of the first TCI state and '2R' defines that 2 antenna ports are associated with reception of the second TCI state.

RX-AP-set#2, 5R3R, where '5R' defines that 5 antenna ports are associated with reception of the first/second TCI state and '3R' defines that 3 antenna ports are associated with reception of the second/first TCI state.

RX-AP-set#3, 4R4R, where the first '4R' defines that 4 antenna ports are associated with reception of the first/second TCI state and the second '4R' defines that 4 antenna ports are associated with reception of the second/first TCI state.

RX-AP-set#4, R2R2, where the first '2R' defines that 2 antenna ports are associated with reception of the first/second TCI state and the second '2R' defines that 2 antenna ports are associated with reception of the second/first TCI state.

In one implementation example, a higher layer parameter CSI-MeasConfig is configured with the higher layer parameter `Use-dynamically-shared-simultaneous-RX-AntennaPorts' as 'enabled'.

In one implementation an example of possible implementation of TS 38.331 specification with the amendments related to the above illustrated embodiments in CSI-MeasConfig is defined as:

```
-- ASN1START
    -- TAG-CSI-MEASCONFIG-START
    CSI-MeasConfig ::= SEQUENCE {
    --- void text ----
    Use-dynamically-shared-simultaneous-RX-AntennaPorts BOOLEAN {Configured,
    Not Configured} -- defines whether UE shall use dynamically shared RX antenna
    ports for CSI measurements and reporting and/or downlink reference signals
    --- void text ----
    }
    -- TAG-CSI-MEASCONFIG-STOP
    -- ASN1STOP
```

In one implementation an example of possible implementation of TS 38.331 specification with the amendments related to the above illustrated embodiments in CSI-ReportConfig is defined as:

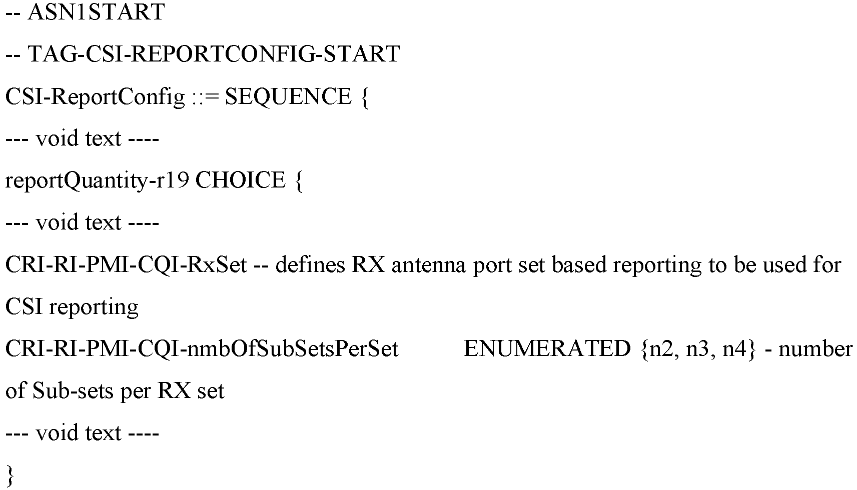

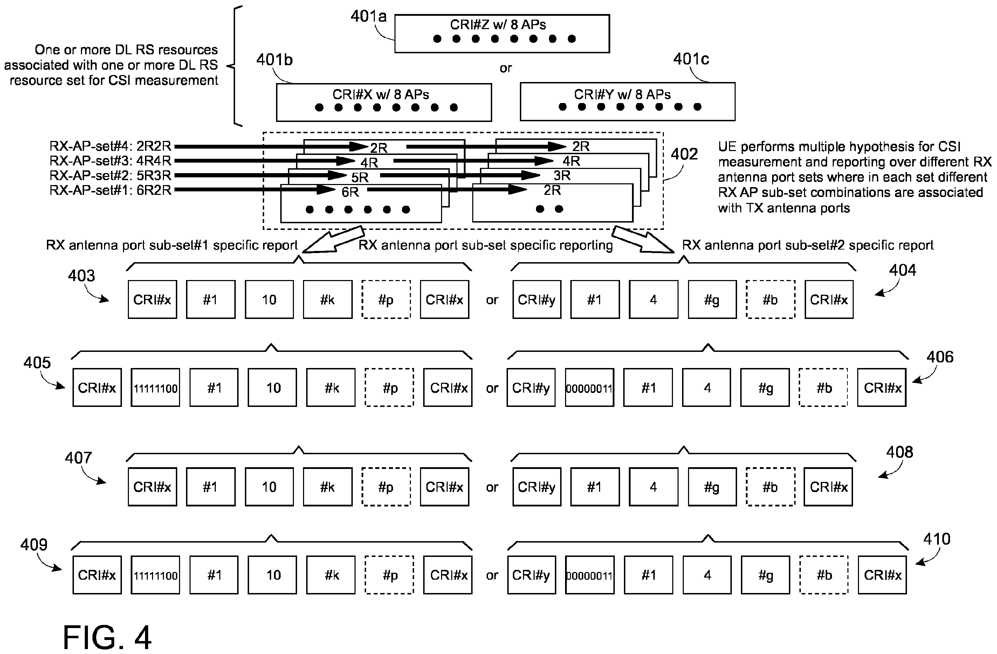

Fig. 4 shows an example of CSI measurement and reporting with dynamically shared RX antenna port sets. The dashed boxes are only valid when two Precoding Matrix Indicators (PMI) are required subject to CSI reporting mode.

In Fig. 4, the blocks 401a, 401b, 401c illustrate different CRI blocks for one or more DL RS resources associated with one or more resource sets for CSI measurement. In this example, it is assumed that the UE has 8 antenna ports, wherein the first CRI block 401a is associated with the CSI-RS identifier CRI#Z, the second CRI block 401b is associated with the CSI-RS identifier CRI#X, and the third CRI block 401c is associated with the CSI-RS identifier CRI#Y.

The UE performs multiple hypothesis for CSI measurements and reporting over different RX antenna port sets where in each set different RX AP sub-set combinations are associated with TX antenna ports. The blocks 402 illustrate different RX AP sets #1, #2, #3 and #4.

The UE forms RX antenna port sub-set specific report for a first sub-set #1 (blocks 403) and/or for a second sub-set #2 (blocks 404). The blocks 403, 404 depict different parameters in the reports: CRI-ID (CSI-RS identifier), RX antenna port sub-set indicator (RX-AP-setID), Channel Quality Indicator (CQI), a first Precoding Matrix Indicator (PMI), a second Precoding Matrix Indicator (PMI) only when two PMIs are required subject to CSI reporting mode, and a Rank Indicator (RI). This structure is applicable for single-DCI and multi-DCI deployments (multi resource).

Alternatively, the UE forms the RX antenna port sub-set specific report(s) 405, 406 which include(s), in addition to those mentioned above, information regarding TX antenna ports (TX-Aps). The TX antenna ports may be indicated by a bitmap of length K, where each bit position is mapped into an antenna port of the CRI. For example, a bit having a value '1' indicates that the TX antenna port is included in the CRI, and a bit having a value '0' indicates that the TX antenna port is not included in the CRI. Alternatively, the antenna ports of the CRI may be reported explicitly. This structure is applicable for single-DCI and multi-DCI deployments (multi- and/or single resource).

Alternatively, applicable for multi resource, single-DCI deployments, the UE forms RX antenna port sub-set#1 specific report 407 as illustrated above and/or RX antenna port sub-set#2 specific report 408 as illustrated above except that no RX-AP-set indication is included.

Alternatively, applicable for multi and/or single resource, single-DCI deployments, the UE forms the RX antenna port sub-set#1 specific report 409 similarly to the first alternative above (blocks 405) and/or RX antenna port sub-set#2 specific report 410 similarly to the first alternative above (blocks 406) without including the RX-AP-set indication.

It should be noted that the first antenna port sub-set#1 and the second antenna port sub-set#2 are only examples of antenna sub-sets wherein instead of or in addition to the first antenna port sub-set#1 and the second antenna port sub-set#2 other antenna port sub-sets may be indicated and reported.

The UE can be configured with a set of NZP-CSI-RS resources out of which it may be asked to report a subset. The identification of such NZP-CSI-RS is done by a CSI-RS RI. When a UE is configured with more than one nonzero-power CSI-RSs, it can report a set of N UE-selected CSI-RS resource-related indices.

In accordance with an embodiment, the UE is equipped with different RX antenna port sets which the UE can dynamically share for the transmission and reception of signals.

In one alternative embodiment, the UE is equipped with both dynamically shared TX antenna port sets and fixed TX antenna ports. In addition to or instead of having both dynamically shared TX antenna port sets and fixed TX antenna ports, the UE is equipped with both dynamically shared RX antenna port sets and fixed RX antenna ports. In the case of dynamically shared antenna port sets the UE can dynamically share the TX antenna ports and/or RX antenna ports with different antenna arrangements enabling the UE to share its hardware resources associated with reception and transmission as efficiently as possible, e.g. in terms of energy/power saving or latency or throughput. In the case of fixed TX antenna ports and/or RX antenna ports, the TX antenna ports and/or RX antenna ports are associated with certain fixed antenna arrangements (i.e. antenna element(s) or antenna connector(s) or antenna panel(s)).

When the UE is configured by the parameter(s) `Use-dynamically-shared-simultaneous-RX-AntennaPorts' and/or `Use-dynamically-shared-simultaneous-TX-AntennaPorts' with antenna port selection criteria, e.g. maxEnergy saving/maxThroughput/lowLatency/highReliability, the network can control dynamic antenna port selection procedure such that the UE performs dynamic TX antenna port set selection and/RX antenna port set selection according to certain criterion.

In one another alternative embodiment, the UE can operate in a hybrid mode in terms of dynamically shared RX antenna ports and dynamically shared TX antenna ports and fixed TX antenna port(s) and RX antenna port(s). As a result of this the following operation mode combinations can be obtained:
- All RX antenna ports sets are dynamically shared and all TX antenna ports are fixed
- All RX antenna ports are fixed and all TX ports are dynamically shared
- Both RX and TX antenna ports are dynamically shared
- Both RX and TX antenna ports are fixed
- Part of RX antenna ports sets are dynamically shared, and part of RX antenna ports are fixed and all TX antenna ports are fixed
- Part of TX antenna ports sets are dynamically shared, and part of TX antenna ports are fixed and all RX antenna ports are fixed
- Part of TX antenna ports sets are dynamically shared and part of TX antenna ports are fixed and part of RX antenna ports are dynamically shared and part of RX antenna ports are fixed.

In one embodiment, the UE decides the grouping of different TX and/or RX antenna port sets based on one or more of the following criterion:
- Placement of the antenna ports, and their relative distance to each other, e.g if they are placed in the same panel, on the same side of the UE and/or wiring distance between RX/TX antenna port and physical antenna arrangement is sufficiently short (e.g. minimized TX or RX signal attenuation and latency associated with wiring between RX/TX antenna port and physical antenna arrangement)
- Coherency between antenna ports between different antenna port sets, for example UE to maximize throughput for PDSCH reception, the UE shall group different RX antenna port sets such that full coherency (i.e in phase and amplitude domain with a certain implementation specific marging, e.g. in phase domain <45 degree phase difference and in amplitude domain <4dB difference in amplitude can be guaranteed for a reception of PDSCH .
- Power saving mechanisms of the UE, e.g if the UE wants to operate in a default mode of operation with a specific number of antennas, like 1Rx or 2RX antenna, and transmit with 1Tx or 2Tx antenna, these being part of the same antenna port set, and allow another set of antennas, in a so called secondary set of Rx antennas to be enabled for higher throughput operation, or increased coverage operation.
- Where it is understood that the criteria for selecting the grouping of different RX antenna port sets may be based on a low complexity metric which is first used to perform a search over all the possible antenna ports combinations, followed by higher complexity metrics, e.g. throughput based, which are used to further confirm the port sets arrangements on a subset of the previously identified antenna ports set combinations.

In one embodiment, for the 'highReliability' criteria selection, the UE may select one or more antenna ports associated with panels/beams that can be received using the wide (or widest) RX beams out of a set of RX beams.

The implementations described above may have one or more of the following advantages. The UE may be able to apply advanced MIMO/MU-MIMO receivers with reduced complexity. The UE may be able to apply flexibly different RX antenna port configurations in network-controlled manner. The UE may be able to use receiver implementation where a part of the RX antenna ports are. By using single DL RS resource measurement and reporting, the implementations may enable to reduce DL RS resource overhead by providing multiple CSI reports from a single resource.

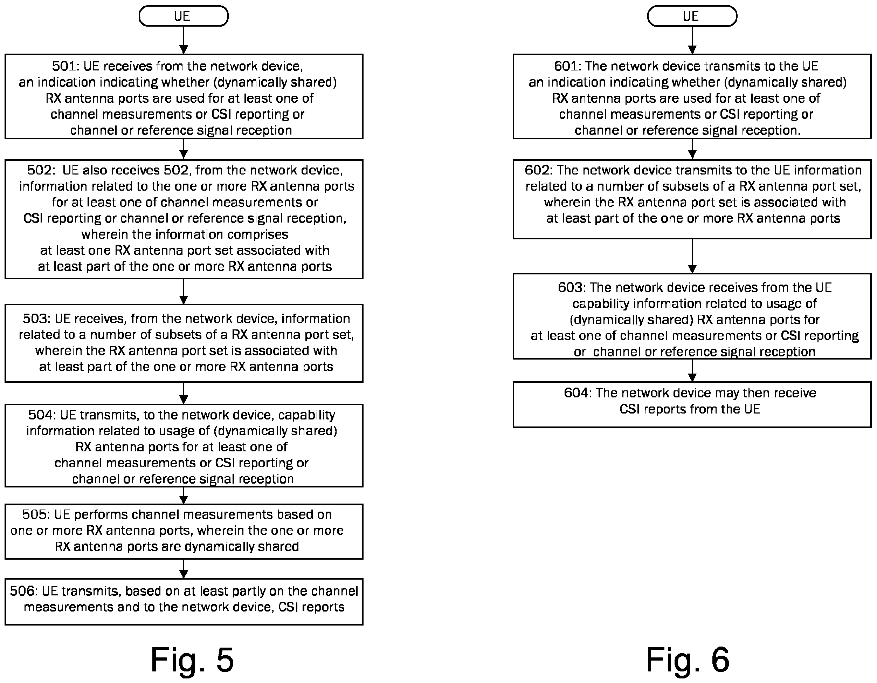

Fig. 5 shows as a flow diagram some steps for the UE in connection with the SRS procedure. The UE receives 501, from the network device, an indication indicating whether (dynamically shared) RX antenna ports are used for at least one of channel measurements or CSI reporting or channel or reference signal reception. The UE also receives 502, from the network device, information related to the one or more RX antenna ports for at least one of channel measurements or CSI reporting or channel or reference signal reception, wherein the information comprises at least one RX antenna port set associated with at least part of the one or more RX antenna ports, wherein at least one antenna port can be associated with one or more antenna arrangements. The UE further receives 503, from the network device, information related to a number of subsets of a RX antenna port set, wherein the RX antenna port set is associated with at least part of the one or more RX antenna ports. The UE transmits 504, to the network device, capability information related to usage of (dynamically shared) RX antenna ports for at least one of channel measurements or CSI reporting or channel or reference signal reception. The UE performs 505 channel measurements based on one or more RX antenna ports, wherein the one or more RX antenna ports are dynamically shared. The UE then transmits 506, based on at least partly on the channel measurements and to the network device, CSI reports.

Fig. 6 shows as a flow diagram some steps for the network device in connection with the measurement and reporting procedure. The network device, such as the gNB, transmits 601 to the UE an indication indicating whether (dynamically shared) RX antenna ports are used for at least one of channel measurements or CSI reporting or channel or reference signal reception. The network device transmits 602 to the UE information related to a number of subsets of a RX antenna port set, wherein the RX antenna port set is associated with at least part of the one or more RX antenna ports, wherein at least one antenna port can be associated with one or more antenna arrangements. The network device receives 603 from the UE capability information related to usage of (dynamically shared) RX antenna ports for at least one of channel measurements or CSI reporting or channel or reference signal reception. The network device may then receive 604 CSI reports from the UE.

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example, performing such functionality or functionalities may be caused in an apparatus by a processor that executes instructions stored in a memory of the apparatus.

An apparatus according to a further aspect comprises at least one processor and at least one memory storing instructions that, when executed by the at least one processor, cause the apparatus at least to perform receiving, from a network device, an indication indicating whether one or more receive antenna ports of the apparatus are used for at least one of channel measurements or channel state information reporting; information related to the one or more receive antenna ports for at least one of channel measurements or channel state information reporting, wherein the information comprises at least one receive antenna port set associated with at least a part of the one or more receive antenna ports; and information related to at least one receive antenna port of the receive antenna port set, wherein the receive antenna port set is associated with at least part of the one or more receive antenna ports; wherein the at least one memory further storing instructions that, when executed by the at least one processor, cause the apparatus at least to perform transmitting, to the network device, capability information related to usage of the one or more receive antenna ports for at least one of channel measurements or channel state information reporting.

Such apparatuses may comprise, e.g., the functional units disclosed in any of the Figs. 1-3 for implementing the embodiments.

A further aspect relates to a computer program product, stored on a non-transitory memory medium, comprising computer program code, which when executed by at least one processor, causes an apparatus at least to perform receiving, from a network device, an indication indicating whether one or more receive antenna ports of the apparatus are used for at least one of channel measurements or channel state information reporting; information related to the one or more receive antenna ports for at least one of channel measurements or channel state information reporting, wherein the information comprises at least one receive antenna port set associated with at least a part of the one or more receive antenna ports; and information related to at least one receive antenna port of the receive antenna port set, wherein the receive antenna port set is associated with at least part of the one or more receive antenna ports; wherein the at least one memory further storing instructions that, when executed by the at least one processor, cause the apparatus at least to perform transmitting, to the network device, capability information related to usage of the one or more receive antenna ports for at least one of channel measurements or channel state information reporting.

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or processor or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiments of this invention. However, various modifications and adaptations may become apparent to those skilled in the relevant arts in view of the foregoing description, when read in conjunction with the accompanying drawings and the appended examples. However, all such and similar modifications of the teachings of this invention will still fall within the scope of this invention.

## Claims

1. A user equipment comprising:
means for receiving, from a network device,
an indication indicating whether one or more receive antenna ports of the user equipment are used for at least one of channel measurements or channel state information reporting or channel or reference signal reception;
information related to the one or more receive antenna ports for at least one of channel measurements or channel state information reporting or channel or reference signal reception, wherein the information comprises at least one receive antenna port set associated with at least a part of the one or more receive antenna ports; and
information related to at least one receive antenna port of the receive antenna port set, wherein the receive antenna port set is associated with at least part of the one or more receive antenna ports, wherein at least one antenna port is configured to be associated with one or more antenna arrangements; and
wherein the user equipment further comprises:
means for dynamically sharing one or more of the receive antenna ports for transmission and reception of signals; and
means for transmitting, to the network device, capability information related to usage of the one or more receive antenna ports for at least one of channel measurements or channel state information reporting or channel or reference signal reception.

2. The user equipment according to claim 1, wherein said antenna arrangement comprises one or more antenna elements, antenna connectors or antenna panels.

3. The user equipment according to any of claims 1 or 2 comprising:
different receive antenna port sets; and
means for dynamically sharing the receive antenna port sets for transmission and reception of signals.

4. The user equipment according to any of claims 1, 2 or 3 comprising:
dynamically shared transmit antenna port sets and fixed transmit antenna ports; or
dynamically shared receive antenna port sets and fixed receive antenna ports; or
dynamically shared transmit antenna port sets and fixed transmit antenna ports and dynamically shared receive antenna port sets and fixed receive antenna ports.

5. The user equipment according to any of claims 1, 2, 3 or 4 comprising transmit antenna port sets, transmit antenna ports, receive antenna port sets, and fixed receive antenna ports; and means for obtaining one or more of the following operation mode combinations:
all receive antenna ports sets are dynamically shared and all transmit antenna ports are fixed;
all receive antenna ports are fixed and all transmit ports are dynamically shared;
both receive and transmit antenna ports are dynamically shared;
both receive and transmit antenna ports are fixed;
a part of receive antenna ports sets are dynamically shared, and part of receive antenna ports are fixed and all transmit antenna ports are fixed;
a part of transmit antenna ports sets are dynamically shared, and part of transmit antenna ports are fixed and all receive antenna ports are fixed;
a part of transmit antenna ports sets are dynamically shared and part of transmit antenna ports are fixed and part of receive antenna ports are dynamically shared and part of receive antenna ports are fixed.

6. The user equipment according to any of the claims 1 to 5 comprising means for grouping different transmit antenna port sets and receive antenna port sets based on one or more of the following:
placement of the antenna ports, and their relative distance to each other;
coherency between antenna ports between different antenna port sets;
power saving mechanisms of the user equipment;

7. The user equipment according to claim 6 comprising means for selecting the grouping of different receive antenna port sets configured to use a low complexity metric to perform a search over possible antenna ports combinations and higher complexity metrics, which are used to further confirm the port sets arrangements on a subset of the previously identified antenna ports set combinations.

8. The user equipment according to any of the claims 1 to 7 configured to select one or more antenna ports associated with panels or beams that can be received using a wide or widest receive beam out of a set of receive beams.

9. A method comprising:
receiving, from a network device, an indication indicating whether one or more receive antenna ports of the apparatus are used for at least one of channel measurements or channel state information reporting or channel or reference signal reception;
receiving, from the network device, information related to the one or more receive antenna ports for at least one of channel measurements or channel state information reporting or channel or reference signal reception, wherein the information comprises at least one receive antenna port set associated with at least a part of the one or more receive antenna ports;
receiving, from a network device, information related to at least one receive antenna port of the receive antenna port set, wherein the receive antenna port set is associated with at least part of the one or more receive antenna ports, wherein at least one antenna port is associated with one or more antenna arrangements;
dynamically sharing one or more of the receive antenna ports for transmission and reception of signals; and
transmitting, to the network device, capability information related to usage of the one or more receive antenna ports for at least one of channel measurements or channel state information reporting or channel or reference signal reception.

10. The method according to claim 9, wherein said antenna arrangement comprises one or more antenna elements, antenna connectors or antenna panels.

11. The method according to any of claims 9 or 10 comprising:
using different receive antenna port sets; and
dynamically sharing the receive antenna port sets for transmission and reception of signals.

12. The method according to any of claims 9, 10 or 11 comprising obtaining one or more of the following operation mode combinations for transmit antenna port sets, transmit antenna ports, receive antenna port sets, and fixed receive antenna ports:
all receive antenna ports sets are dynamically shared and all transmit antenna ports are fixed;
all receive antenna ports are fixed and all transmit ports are dynamically shared;
both receive and transmit antenna ports are dynamically shared;
both receive and transmit antenna ports are fixed;
a part of receive antenna ports sets are dynamically shared, and part of receive antenna ports are fixed and all transmit antenna ports are fixed;
a part of transmit antenna ports sets are dynamically shared, and part of transmit antenna ports are fixed and all receive antenna ports are fixed;
a part of transmit antenna ports sets are dynamically shared and part of transmit antenna ports are fixed and part of receive antenna ports are dynamically shared and part of receive antenna ports are fixed.

13. The method according to any of the claims 9 to 12 comprising grouping different transmit antenna port sets and receive antenna port sets based on one or more of the following:
placement of the antenna ports, and their relative distance to each other;
coherency between antenna ports between different antenna port sets;
power saving mechanisms of the method;

14. The method according to claim 13 comprising selecting the grouping of different receive antenna port sets configured to use a low complexity metric to perform a search over possible antenna ports combinations and higher complexity metrics, which are used to further confirm the port sets arrangements on a subset of the previously identified antenna ports set combinations.

15. The method according to any of the claims 9 to 14 configured to select one or more antenna ports associated with panels or beams that can be received using a wide or widest receive beam out of a set of receive beams.
